(19) Europäisches Patentamt
European Patent Office
Office européen des brevets

(11) Veröffentlichungsnummer: **0 216 339**
**B1**

(12) # EUROPÄISCHE PATENTSCHRIFT

(45) Veröffentlichungstag der Patentschrift: **09.05.90**

(51) Int. Cl.$^5$: **C 09 B 29/085,** D 06 P 1/18

(21) Anmeldenummer: **86113002.9**

(22) Anmeldetag: **20.09.86**

(60) **Teilanmeldung 87119207 eingereicht am 24.12.87.**

(54) **Monoazofarbstoffe, ihre Herstellung und Verwendung.**

(30) Priorität: **24.09.85 DE 3533980**

(43) Veröffentlichungstag der Anmeldung:
**01.04.87 Patentblatt 87/14**

(45) Bekanntmachung des Hinweises auf die Patenterteilung:
**09.05.90 Patentblatt 90/19**

(84) Benannte Vertragsstaaten:
**CH DE FR GB LI**

(56) Entgegenhaltungen:
**EP-A-0 031 478**
**EP-A-0 078 006**
**CH-A- 343 560**
**CH-A- 640 560**
**GB-A-2 108 141**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft**
**Hanauer Landstrasse 526**
**D-6000 Frankfurt am Main 61 (DE)**

(72) Erfinder: **Bühler, Ulrich, Dr.**
**Kastanienweg 8**
**D-8755 Alzenau (DE)**
Erfinder: **Tappe, Horst, Dr.**
**Ringstrasse 9**
**D-6057 Dietzenbach (DE)**
Erfinder: **Kühn, Reinhard**
**Heinrich Bleicherstrasse 39**
**D-6000 Frankfurt 50 (DE)**
Erfinder: **Bode, Albert**
**Finkenweg 1**
**D-6231 Schwalbach (DE)**
Erfinder: **Boos, Margareta**
**Am See 6**
**D-6234 Hattersheim 3 (DE)**

(74) Vertreter: **Urbach, Hans-Georg, Dr. et al**
**Hanauer Landstrasse 526**
**D-6000 Frankfurt am Main 61 (DE)**

**EP 0 216 339 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft wertvolle Monoazofarbstoffe der allgemeinen Formel I

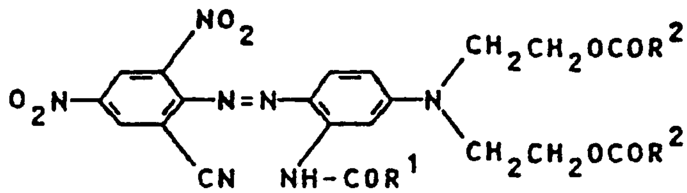

(I)

in der

$R^1$ Alkyl mit 1 bis 3 C-Atomen,

$R^2$ Alkoxy mit 1 bis 4 C-Atomen, das durch Methoxy oder Ethoxy substituiert sein kann, bedeuten.

Die Erfindung betrifft auch Mischungen von Farbstoffen der allgemeinen Formel I sowie die Herstellung dieser Farbstoffe und ihrer Mischungen und ihre verwendung zum Färben von hydrophoben Fasermaterialien.

Der für $R^1$ stehende Alkylrest mit 1 bis 3 C-Atomen kann Methyl, Ethyl, n-Propyl oder i-Propyl bedeuten.

Alkoxygruppen mit 3 oder 4 C-Atomen im Rest $R^2$ können geradkettig oder verzweigt sein. Alkoxyreste, die für $R^2$ stehen können, sind: Methoxy, Ethoxy, n-Propoxy, i-Propoxy, n-Butoxy, i-Butoxy, sek.-Butoxy und tert. Butoxy. Methoxy- bzw. ethoxysubstituierte Alkoxyreste, die für $R^2$ stehen können, sind z.B. 2-Methoxyethoxy und 2-Ethoxyethoxy.

Bevorzugte Reste für $R^1$ sind Methyl und Ethyl.

Bevorzugte Reste für $R^2$ sind Methoxy, Ethoxy, i-Propoxy, Methoxyethoxy und Ethoxyethoxy, von denen Methoxy und Ethoxy besonders bevorzugt sind.

Besonders bevorzugt sind erfindungsgemäße Farbstoffe, in denen $R^1$ Methyl oder Ethyl und $R^2$ Methoxy oder Ethoxy bedeuten.

Aus der CH—A—343 560 ist ein Verfahren zur Herstellung wasserunlöslicher Farbstoffe bekannt, das u.a. darin besteht, daß 4-Nitro-anilin diazotiert und auf 1-(Di-(hydroxyethyl)-amino)-3-acetyl- oder propionylamino-benzol gekuppelt wird und der entstandene Farbstoff mit einem funktionellen Derivat einer 1 bis 3 Kohlenstoffatome aufweisenden aliphatischen Carbonsäure umgesetzt wird, wobei die freien Hydroxylgruppen der Hydroxyethylreste acyliert werden. Gegenüber diesen Farbstoffen sind die erfindungsgemäßen Farbstoffe in einigen Echtheitseigenschaften überlegen.

Den erfindungsgemäßen Farbstoffen ähnliche Farbstoffe sind bereits bekannt und in den Deutschen Offenlegungsschriften 15 44 563, 27 24 117, 29 22 226 und 30 25 957 sowie in der US—PS 4 237 048 beschrieben. Es wurde jedoch überraschenderweise gefunden, daß die erfindungsgemäßen Farbstoffe diesen bekannten Farbstoffen im färberischen Verhalten auf verschiedenen Substraten sowie bei einigen wichtigen Anwendungs- und Gebrauchsechtheiten, wie Thermomigrationsechtheit, Thermofixierechtheit, Waschechtheit und Lichtechtheit, deutlich überlegen sind. Insgesamt ergibt sich hieraus für die erfindungsgemäßen Farbstoffe und ihre Mischungen ein nicht vorhersehbarer, erhablicher anwendungstechnischer Vorteil.

Die Herstellung der erfindungsgemäßen Farbstoffe erfolgt orzugsweise dadurch, daß man einen Azofarbstoff der Formel II

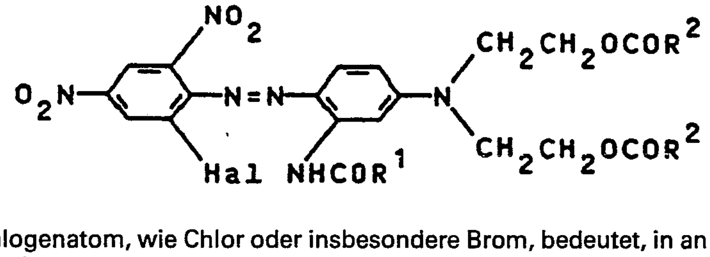

(II)

in welcher Hal ein Halogenatom, wie Chlor oder insbesondere Brom, bedeutet, in an sich bekannter Weise, z.B. nach den Angaben der DE—OS 1809920, der DE—OS 1809921, der GB—PS 1184825, der DE—AS 1544563, der DE—OS 2310745, der DE—AS 2456495, der DE—AS 2610675, der DE—OS 2724116, der DE—OS 2724117, der DE—OS 2834137, der DE—OS 2341109, der US—PS 3821195, der DE—OS 2715034 oder der DE—OS 213896 einer nukleophilen Austauschreaktion unterwirft, wobei als nucleophiles Agenz das Cyanidion CN⊖ eingesetzt wird. Bei dieser Reaktion wird in dem Farbstoff der Formel II Hal gegen CN ausgetauscht.

Als Lösungsmittel für die Austauschreaktion werden inerte organische Lösungsmittel, wie z.B. Nitrobenzol oder Glycol- oder Diglycol-mono-methyl oder -mono-ethylether oder Mischungen solcher Lösungsmittel untereinander und mit tertiären organischen Stickstoffbasen, dipolare aprotische Lösungsmitel, wie

z.B. N-Methylpyrrolidon, Pyridin, Dimethylformamid, Dimethylsulfoxyd oder Dicyan-dialkyl-thioether eingesetzt. Weiterhin sind als Medium für die Austauschreaktion Wasser oder wäßrige Systeme bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150°C.

Das nucleophile Agenz CN⊖ wird der Reaktion in Form eines gegebenenfalls komplexen Metallcyanids, wie z.B. eines Alkali- oder Erdalkalicyanids, Zinkcyanids, Alkalicyano-kinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid:Kupfer-I-cyanid liegt bei 5:95 bis 95:5. Auch außerhalb dieser Grenzen ist noch die positive gegenseitige Beeinflussung der Komponenten feststellbar. Selfstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe erforderlichen Farbstoffe der Formel II können dadurch hergestellt werden, daß eine Diazoniumverbindung eines aromatischen Amins der allgemeinen Formel III

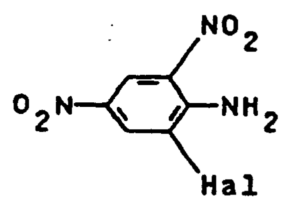

(III)

in an sich bekannter Weise mit einer Kupplungskomponente der allgemeinen Formel IV

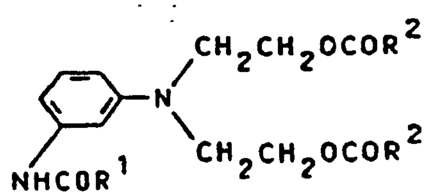

(IV)

worin Hal, $R^1$ und $R^2$ die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure wie z.B. Ameisensäure, Essigsäure oder Propionsäure oder deren Mischungen bei Temperaturen von −15°C bis 40°C erhalten.

Die Kupplung erfolgt enebfalls in an sich bekannter Weise durch Vereinigung der erhaltenen Diazolösung mit einer Lösung der Kupplungskomponente bei Temperaturen von 0 bis 40°C, vorzugsweise 0 bis 25°C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregesmisch.

In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel II kann wie üblich isoliert und getrocknet werden.

Die benötigten Kupplungskomponenten der Formel IV lassen sich aus bekannten Handelsprodukten nach bekannten Verfahren herstellen.

Ein weiteres Verfahren zur Herstellung der erfindungsgemäßen Farbstoffe besteht in der Acylierung von Farbstoffen der Formel V

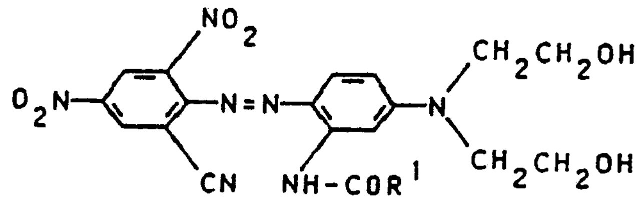

(V)

mit bekannten Acylierungsmitteln der Formel

$$X—CO—R^2,$$

worin X ein unter Mitnahme des Bindungselektronenpaares abspaltbarer Rest ist und $R^2$ die oben genannte Bedeutung hat, die den Ersatz der Protonen der Hydroxylgruppen durch die Gruppe $—CO—R^2$ bewirken. Als Acylierungsmittel Derivate der Ameisensäureester, wie z.B. Halogenameinsensäureester, insbesondere Chlorameinsensäureester ($ClCO—OR^2$) oder Kohlensäure-diester ($OC(OR^2)_2$), geeignet.

Bei der Durchführung der Acylierungsreaktion ist es zweckmäßig, zur Moderierung der Reaktion in einem Lösungs- oder Verdünnungsmittel zu arbeiten. Geeignet sind alle organischen Lösungsmittel, die mit den Acylierungsmitteln nicht in Reaktion treten können. Vorwiegend verwendet man aromatische Kohlenwasserstoffe, wie Benzol, Toluol, Xylol als Lösungs-, Verdünnungs- oder Dispergiermittel, wobei es zweckmäßig ist, die Acylierung ebenfalls in Gegenwart eines Säurefängers, wie beispielsweise einer tertiären organischen Aminbase, vorzunehmen. Acylierungen der genannten Art können auch in Gegenwart von Pyridin- oder Pyridinabkömmlingen als Lösungsmittel durchgeführt werden. In diesem Fall wirkt das Lösungsmittel selbst als Säurefänger. Die Acylierung der Farbstoffe der Formel V kann bei Temperaturen zwischen der normalen Zimmertemperatur und Temperaturen bis 150°C ausgeführt werden. Pro mol des Farbstoffs der Formel V kommen in der Regel mindestens 2 mol des Acylierungsmittels zum Einsatz.

Die für dieses Herstellungsverfahren benötigten Farbstoffe der Formel V können dadurch hergestellt werden, daß eine Diazoniumverbindung eines aromatischen Amins der allgemeinen Formel III

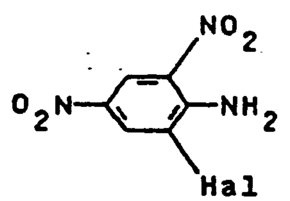

(III)

in an sich bekannter Weise mit einer Kupplungskomponente der allgemeinen Formel VI

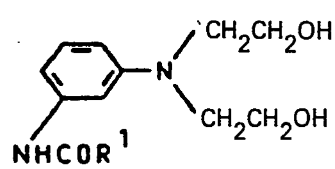

(VI)

worin Hal und $R^1$ die oben angegebenen Bedeutungen haben, gekuppelt und anschließend das Halogenatom Hal durch den Cyanrest ausgetauscht wird.

Die Diazotierung des aromatischen Amins der Formel III und die Kupplung der erhaltenen Diazoniumverbindung auf das Amin der Formel VI erfolgt im Rahmen der Bedingungen, die oben für die Herstellung der Farbstoffe der Formel II bereits ausführlich beschrieben wurden. Auch der anschließende Austausch des Halogenatoms Hal gegen Cyan erfolgt im Rahmen der oben für die Herstellung der erfindungsgemäßen Farbstoffe der Formel I angegebenen Bedingungen.

Erfindungsgemäße Farbstoffmischungen bestehen aus zwei oder mehreren Farbstoffen der Formel I, in der $R^1$ und $R^2$ die oben angegebenen Bedeutungen haben. Bevorzugt sind Mischungen aus Farbstoffen der Formel I, die sich nur in der Bedeutung des Restes $R^1$ unterscheiden.

In den erfindungsgemäßen Farbstoffmischungen kann das Verhältnis der verschiedenen Farbstoffe der allgemeinen Formel I in relativ weiten Grenzen variieren, und die Farbstoffe können als Kristallmischungen oder ganz oder teilweise in Form von Mischkristallen vorliegen. Im allgemeinen beträgt der Mindestgewichtsanteil einer Komponente 10% und ihr maximaler Gewichtsanteil 90%. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70%.

Die erfindungsgemäßen Farbstoffmischungen können nach verschiedenen Verfahren hergestellt werden:

1) Durch Mischen von mindestens zwei separat hergestellten und formierten Einzelfarbstoffen der Formel I. Die Mischung erfolgt in der Regel in Anwesenheit einer flüssigen Phase vorzugsweise unter Zusatz von Dispergiermitteln. Dieser Mischprozeß erfolgt bei Temperaturen von 0 bis 190°C, zweckmäßigerweise in geeigneten Mühlen, beispielsweise Kugel- und Sandmühlen, sowie Knetern, kann aber auch durch Mischen mit der Hand oder durch Einrühren in Dispersionsmittel oder Färbeflotten bewirkt werden.

Als flüssige Phase können flüssige Dispergiermittel, organische, die Farbstoffe nicht oder wenig lösende vorzugsweise wassermischbare Lösungsmittel eingesetzt werden. Vorzugsweise wird als flüssige Phase Wasser eingesetzt.

Als Dispergiermittel kommen solche anionischer oder nichtionischer Natur in Betracht. Als anionische Dispergiermittel seien genannt Kondensationsprodukte von Naphthalin, Formaldehyd und Schwefelsäure sowie Ligninsulfonate. Geeignete nichtionische Dispergiermittel sind z.B. in der DE—OS 27 57 330 beschrieben.

Bei dieser Mischmethode werden Farbstoffmischungen erhalten, in denen die Farbstoffe ganz oder überwiegend als Kristallgemische vorliegen, insbesondere wenn bei niedriger Temperatur gemischt wird. Bei erhöhter Temperatur und längerer Mischdauer können aber auch so hergestellte Mischungen mehr oder weniger hohe Anteile von Mischkristallen der eingesetzten Einzelfarbstoffe aufweisen.

Formierte Einzelfarbstoffe sind solche, die nach der chemischen Synthese einer Formierung, d.h. einer physikalischen Behandlung unterworfen wurden, im Verlauf derer die Farbstoffe Gelegenheit erhalten, weitgehend eine bestimmte, gewünschte Kristallmodifikation einzunehmen. Verschiedene derartige physikalische Behandlungen sind bekannt, z.B. Behandlung mit Wasser oder organischen Lösungsmitteln, vorzugsweise unter Einwirkung von Scherkraften, insbesondere Behandlung mit Wasser in Gegenwart von Dispergiermitteln. Je nach der angestrebten Kristallmodifikation und der Umwandlungsgeschwindigkeit kann die Behandlung bei Temperaturen von 0 bis ca. 190°C erfolgen.

In der Regel wird durch Formierung eine bei erhöhter Temperatur besonders stabile Kristallmodifikation angestrebt. Es ist daher zweckmäßig, die Formierung bei Temperaturen oberhalb 80°C, vorzugsweise 90—150°C, insbesondere 100—140°C, vorzunehmen.

Formierte Einzelfarbstoffe mit weitgehend einheitlicher und stabiler Kristallstruktur können aber auch dann erhalten werden, wenn der Farbstoff im Verlauf seiner Synthese die Gelegenheit zur Formierung hatte, was insbesondere dann der Fall ist, wenn er dabei auf eine Temperatur von midestens 80°C, vorzugsweise 90—150°C, insbesondere 100—140°C, erwärmt wurde. Auch hierbei können zusätzliche Mittel, wie organische Lösungsmittel und insbesondere Dispergiermittel erforderlich sein.

2) Die Herstellung der Farbstoffmischungen kann auch durch Mischen der separat hergestellten, nicht formierten Einzelfarbstoffe und gemeinsame Formierung erfolgen.

Die Mischung und gemeinsame Formierung der Farbstoffmischung erfolgt dabei in derselben Weise wie oben beschrieben. Bei diesem Vorgehen werden in der Regel Farbstoffzubereitungen erhalten, die zumindest teilweise, oft aber überwiegend oder gänzlich Mischkristalle der eingesetzten Farbstoffe enthalten.

3) Weitere Möglichkeiten zur Herstellung der erfindungsgemäßen Farbstoffmischungen bestehen darin, daß man bei der Herstellung nach einem der oben für die erfindungsgemäßen Einzelfarbstoffe beschriebenen Herstellungsverfahren geeignete Mischungen der Ausgangsmaterialien einsetzt und die so erhaltenen Farbstoffmischungen gegebenenfalls noch in der oben beschriebenen Weise formiert.

Wird z.B. bei dem oben beschriebenen Verfahren des Cyanaustausches anstelle eines Einzelfarbstoffs der Formel II eine Mischung von zwei oder mehreren Farbstoffen der Formel II, die sich bezüglich $R^1$ und/oder $R^2$ voneinander unterschieden, eingesetzt, so erhält man die entsprechende Mischung der erfindungsgemäßen Farbstoffe der Formel I.

Selbstverständlich kann die hierbei eingesetzte Mischung der Farbstoffe der Formel II ihrerseits entweder durch Mischung separat hergestellter Farbstoffe der Formel II erhalten werden, oder sie kann durch Kupplung der Diazoniumverbindung eines Amins der Formel III auf eine entsprechende Mischung von Kupplungskomponenten der Formel IV, die sich bezüglich $R^1$ und/oder $R^2$ voneinander unterschieden, hergestellt werden.

Es ist auch möglich, bei dem oben beschriebenen Acylierungsverfahren anstelle eines einzelnen Ausgangsfarbstoffs der Formel V eine Mischung von zwei oder mehreren Farbstoffen der Formel V, die sich bezüglich $R^1$ voneinander unterschieden, zu acylieren. Eine weitere Variante dieses Verfahrens ist die Acylierung eines Farbstoffs oder einer Mischung von zwei oder mehreren Farbstoffen der Formel V, die sich bezüglich $R^1$ unterscheiden, mit einer Mischung von zwei oder mehreren Acylierungsmitteln, die sich bezüglich $R^2$ voneinander unterscheiden.

Wird im Verlauf einer der beschriebenen Misch-Synthesen bei erhöhter Temperatur gearbeitet, insbesondere oberhalb 80°C, vorzugsweise im Bereich von 90—150°C, so kann bereits auf der Stufe der Synthese eine formierte Form der Farbstoffmischung erhalten werden. In Fällen, in denen die Synthese bei niedriger Temperatur erfolgt, kann gewünschtenfalls die erhaltene Farbstoffmischung, wie oben

beschrieben, einem Formierungsprozeß unterworfen werden.

Bei der Herstellung der Farbstoffmischungen durch obige Mischungssynthesen wird die Mischung der Ausgangsmaterialien in bekannter Weise so gewählt, daß die gewünschte erfindungsgemäße Farbstoffmischung erhalten wird. So ist es selbstverständlich, daß man zur Herstellung einer erfindungsgemäßen Farbstoffmischung, in der a% eines Farbstoffs mit dem Merkmal A und b% eines Farbstoffs mit dem Merkmal B enthalten sind (z.B. Mischung von 80% eines Farbstoffs mit $R^1 = CH_3$ und 20% eines Farbstoffs mit $R^1 = C_2H_5$), ein Gemisch von Kupplungskomponenten der Formel IV einsetzt bestehend aus a% der Komponente mit dem Merkmal A und b% der Komponente mit dem Merkmal B (z.B. 80% der Komponente mit $R^1 = CH_3$ und 20% der Komponente mit $R^1 = C_2H_5$).

Besonders bevorzugt sind Farbstoffmischungen, die im Verlaufe ihrer Herstellung auf Temperaturen von mindestens 80°C, vorzugsweise 90 bis 150°C, besonders bevorzugt 100 bis 140°C, erhitzt worden sind, bzw. solche Farbstoffmischungen, die aus Mischkristallen bestehen, oder Mischkristalle enthalten, die aus zwei oder mehreren der Farbstoffe der Formel I gebildet sind.

Farbstoffmischungen, die im Verlauf ihrer Herstellung auf die genannten Temperaturen von mindestens 80°C erhitzt worden sind, können dadurch hergestellt werden, daß man die Einzelfarbstoffe in Substanz oder bevorzugt in einem Dispersionsmittel, wie z.B. Wasser 0,5 bis 3 Stunden lang auf die genannten Temperaturen erhitzt, dann abkühlt, in der Regel isoliert und dann miteinander vermischt. Die Erhitzung kann gegebenenfalls auch im Rahmen einer Umkristallisation der Einzelfarbstoffe durchgeführt werden. Die Erhitzung in Wasser auf Temperaturen über 100°C wird in einem geschlossenen Gefäß durchgeführt. Bei der Erhitzung in einem Dispersionsmittel kann der Zusatz eines oder mehrerer der weiter unten angegebenen Dispergiermittel zweckmäßig sein.

Wenn man ein aus zwei oder mehreren Einzelfarbstoffen bestehendes Farbstoffgemisch auf die vorstehend genannten Temperaturen erhitzt, werden in der Regel Mischkristalle erhalten, die aus zwei oder mehr verschiedenen Farbstoffen der Formel I bestehen.

Erfindungsgemäße aus Mischkristallen bestehende oder Mischkristalle enthaltende Farbstoffmischungen können auch dadurch hergestellt werden, daß man eine Mischung aus mindestens zwei getrennt hergestellten, verschiedenen Farbstoffen der Formel I auflöst und zur Kristallisation oder Ausfällung bringt. Zur Auflösung der Farbstoffmischung sind z.B. organische Lösungsmittel, wie Dimethylformamid, Dimethylsulfoxid, Chlorbenzol, o-Dichlorbenzol, Toluol etc. geeignet. Auch Gemische verschiedener Lösungsmittel können verwendet werden. Die Auflösung erfolgt zweckmüßigerweise bei der Siedetemperatur des Lösungsmittels oder Lösungsmittelgemischs. Beim Abkühlen kristallisieren dann Mischkristalle aus. Statt durch Abkühlung können die Mischkristalle auch durch Ausfällung, d.h. durch Zusatz eines Lösungsmittels, in dem der Farbstoff weniger löslich ist, zur Abscheidung gebracht werden.

Besonders bevorzugt werden Mischkristalle erhalten, wenn man den oben erwähnten Austausch von Halogen gegen Cyan bei einem aus Farbstoffen der Formel II bestehenden Gemisch bei den vorstehend genannten Temperaturen von mindestens 80°C durchführt.

Die Mischkristallbindung kann bevorzugt auch so durchgeführt werden, daß man eine Mischung aus mindestens zwei getrennt hergestellten, verschiedenen Farbstoffen der Formel I in einem schlecht lösenden Lösungsmittel oder Dispersionsmittel anwärmt, wobei nur eine teilweise bis herab zu einer verschwindend geringen Auflösung stattfindet, und die Mischung dadurch in Mischkristalle umwandelt. Als besonders geeignetes Lösungs- oder besser gesagt Dispersionsmittel für eine derartige Umwandlung der Farbstoffmischungen in Mischkristalle hat sich Wasser bei Temperaturen von 80 bis 190°C, insbesondere 90 bis 150°C, vorzugsweise 100 bis 140°C, erwiesen. Es ist selbstverständlich, daß die Erhitzung bei Temperaturen, die nicht mehr in einem offenen Gefäß erreicht werden können, in einem Autoklaven durchgeführt werden. Der Zusatz eines oder mehrerer Lösungsmittler ist dabei zweckmäßig. Ein solcher Lösungsvermittler ist z.B. ein in Wasser ganz lösliches Lösungsmittel, wie z.B. Ethanol, oder ein in Wasser nur teilweise lösliches organisches Lösungsmittel, wie z.B. n-Butanol.

Besonders bevorzugt wird jedoch die Umwandlung der Farbstoffmischungen in Mischkristalle durch Erhitzen in Wasser auf die vorstehend genannten Temperaturen unter Zusatz eines oder mehrerer Emulgatoren und/oder Dispergiermittel durchgeführt.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkali-metallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren, Alkyl- oder Alkylarylsulfonate, sowie Alkyl-aryl-polyglykol-ethersulfate. Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäure-amiden, wie z.B. Anlagerungsprodukte von 5 bis 10 Ethylenoxid-Einheiten an $C_8$—$C_{10}$-Alkylphenole.

Die Umwandlung der Farbstoffgemische in Mischkristalle durch Erhitzen in Wasser ist in der Regel nach 0,5 bis 10 Stunden, vorzugsweise 1 bis 3 Stunden, beendet. Das Vorliegen von Mischkristallen kann

durch Röntgenzählrohrdiagramme nachgewiesen werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1/2$-acetat, Cellulosetriacetat, Polyamide und hochmolekulare Polyester. Vorzugsweise werden die erfindungs gemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen erfolgt in an sich bekannter Weise, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann in an sich bekannter Weise so durchgeführt werden, daß die erfindungsgemäßen Farbstoff oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird. Man erhält auf diese Weise sehr farbstarke rotstichig blaue Färbungen und Drucke mit sehr guten Echtheitseigenschaften, insbesondere einer sehr guten Licht-, Thermofixier-, Thermomigrier- und Waschechtheit, vor allem einer sehr guten M+S-Echtheit (C4A-Wäsche).

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe oder Farbstoffmischungen in möglichst feiner Verteilung vorliegen.

Die Feinverteilung der Farbstoffe erfolgt in an sich bekannter Weise dadurch, daß man den in der Fabrikation anfallenden Farstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25% eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natrium-pentachlorphenolat und insbesondere sogenannten "Säurespender" wie z.B. Butyrolacton, Monochlomracetamid, Natriumchloroacetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglycolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs-und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssig keit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen wietere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder

Phosphorsäure wird ein pH-Wert von 4 bis 5, bei Farbstoffen der allgemeinen Formel I, in der $R^2$ für Alkyl mit 1 bis 2 C-Atomen steht, vorzugsweise von 4, eingestellt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

In eine Suspension aus 100 ml Dimethylsulfoxid, 2,1 g Natriumcyanid und 7,1 g Kupfer-I-cyanid werden bei 70 bis 75°C 62,7 g des Farbstoffs der Formel VII

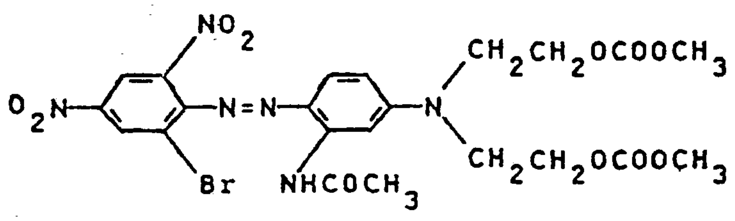

(VII)

eingetragen und 30 min bei dieser Temperatur gerührt. Dann wird die Temperatur 30 min auf 120°C angehoben und der Ansatz anschließend langsam bis 40°C kaltgerührt und bei 40°C abgesaugt, mit 100 ml 40°C warmem Dimethylsulfoxid, 7,5%iger wäßriger, Ammoniaklösung und Wasser gewaschen und unter vermindertem Druck getrocknet. Man erhält so 48,0 g eines blauen Farbstoffs der Formel VIII

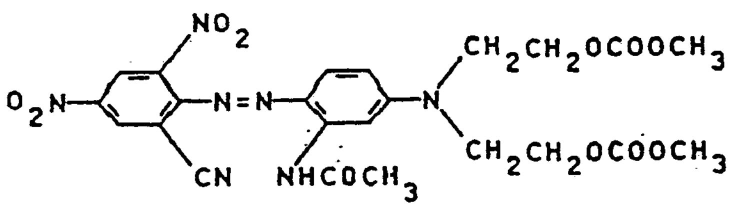

(VIII)

der bei 588 nm sein Absorptionsmaximum besitzt.

Durch einen praxisüblichen Finish-Prozeß durch wäßrige Mahlung in einer Perlmühle mit einem praxisüblichen Dispergiermittel auf Basis Ligninsulfonat und anschließende Sprühtrocknung erhält man eine färbefertige Farbstoffpräparation.

b) 1,2 g der so erhaltenen Farbstoffpräparation werden in 2000 g Wasser dispergiert. Die Dispersion wird mit 3,6 ml 85 %iger Phosphorsäure versetzt, mit Natronlange auf einen pH-Wert von 4 eingestellt und mit 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130°C. Nach anschließendem Spülen, reduktivem Nachbehandeln mit einer 0,2%igen wäßrigen NatriumdithionitLösung während 15 min bei 70 bis 80°C, Spülen und Trocknen erhält man eine farbstarke blaue Färbung mit sehr guten coloristischen Eigenschaften, insbesondere sehr guter Thermofixier-, Thermomigrier- und waschechtheit.

Analog Beispiel 1 lassen sich die erfindungsgemäßen Farbstoffe der folgenden Tabelle herstellen. Sie färben hydrophobe Fasern ebenfalls in vollen rotstichig blauen Nuancen mit ausgezeichneten Echtheiten.

TABELLE

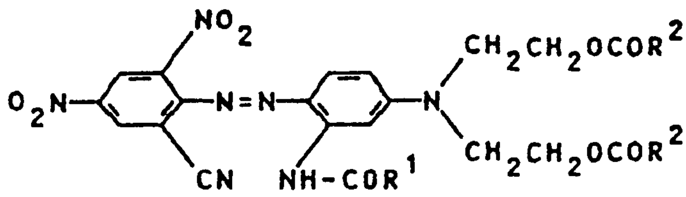

(I)

| $R^1$ | $R^2$ | Nuance auf PES |
|---|---|---|
| $CH_3$ | n-$OC_3H_7$ | rotstichig blau |
| $CH_3$ | i-$OC_3H_7$ | rotstichig blau |
| $CH_3$ | n-$OC_4H_9$ | rotstichig blau |
| $CH_3$ | i-$OC_4H_9$ | rotstichig blau |
| $CH_3$ | $O(CH_2)_2OCH_3$ | rotstichig blau |
| $CH_3$ | $O(CH_2)_2OC_2H_5$ | rotstichig blau |
| $C_2H_5$ | $OCH_3$ | rotstichig blau |
| $C_2H_5$ | $OC_2H_5$ | rotstichig blau |
| $C_2H_5$ | i-$OC_3H_7$ | rotstichig blau |
| $C_2H_5$ | n-$OC_4H_9$ | rotstichig blau |
| $C_2H_5$ | $O(CH_2)_2OCH_3$ | rotstichig blau |
| i-$C_3H_7$ | $OCH_3$ | rotstichig blau |
| i-$C_3H_7$ | $OC_2H_5$ | rotstichig blau |
| i-$C_3H_7$ | n-$OC_4H_9$ | rotstichig blau |
| n-$C_3H_7$ | $OCH_3$ | rotstichig blau |
| n-$C_3H_7$ | $OC_2H_5$ | rotstichig blau |
| n-$C_3H_7$ | $O(CH_2)_2OC_2H_5$ | rotstichig blau |

**Patentansprüche**

1. Monoazofarbstoff der allgemeinen Formel I

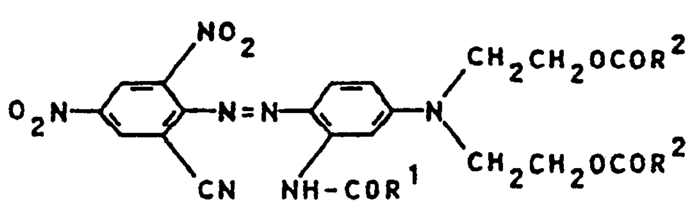

(I)

in der
$R^1$ Alkyl mit 1 bis 3 C-Atomen,
$R^2$ Alkoxy mit 1 bis 4 C-Atomen, das durch Methoxy oder Ethoxy substituiert sein kann, bedeuten.

2. Azofarbstoff nach Anspruch 1, dadurch gekennzeichnet, daß $R^1$ Methyl oder Ethyl bedeuten.

3. Azofarbstoff nach Anspruch 1, dadurch gekennzeichnet, daß $R^2$ Methoxy oder Ethoxy bedeutet.

4. Azofarbstoff nach Anspruch 1, dadurch gekennzeichnet, daß $R^1$ Methyl oder Ethyl und $R^2$ Methoxy oder Ethoxy bedeuten.

5. Mischung von zwei oder mehreren verschiedenen Azofarbstoffen der Formel I eines oder mehrerer der Ansprüche 1 bis 4.

6. Mischung von Azofarbstoffen gemäß Anspruch 4, dadurch gekennzeichnet, daß sich die in der Mischung enthaltenen Farbstoffe der Formel I nur in der Bedeutung der Reste $R^1$ unterscheiden.

7. Verfahren zur Herstellung von Azofarbstoffen der Formel I des Anspruchs 1, dadurch gekennzeichnet, daß man einen Azofarbstoff der Formel II

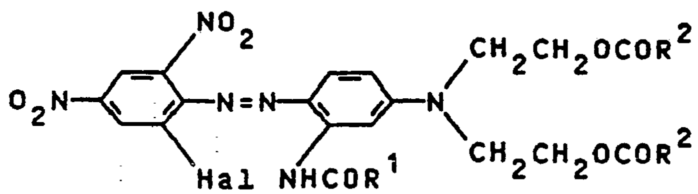

(II)

in welcher Hal ein Halogenatom bedeutet, in an sich bekannter Weise einer nukleophilen Austauschreaktion mit $CN^{\ominus}$ als nucleophilem Agenz unterwirft.

8. Verfahren zur Herstellung von Azofarbstoffen der Formel I des Anspruchs 1, dadurch gekennzeichnet, daß man einen Farbstoff der Formel V

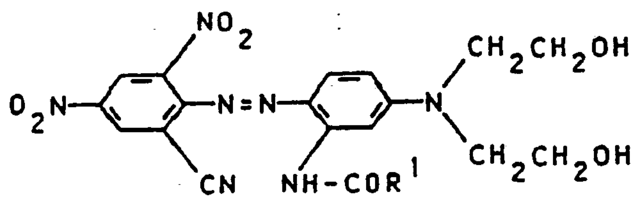

(V)

mit bekannten Acylierungsmitteln der Formel

$$X{-}CO{-}R^2,$$

worin X ein unter Mitnahme des Bindungselektronenpaares abspaltbarer Rest ist und $R^2$ die im Anspruch 1 angegebene Bedeutung hat, acyliert.

9. Verfahren nach Anspruch 7 oder 8, dadurch gekennzeichnet, daß man zur Herstellung von Mischungen von zwei oder mehreren Farbstoffen der Formel I entsprechende Mischungen der Farbstoffe der Formeln II bzw. V als Ausgangsmaterial einsetzt.

10. Verwendung der Azofarbstoffe der Formel I des Anspruchs 1 oder deren Mischungen gemäß Anspruch 5 zum Färben oder Bedrucken von hydrophoben Fasern.

**Revendications**

1. Colorant monoazoïque de formule générale I:

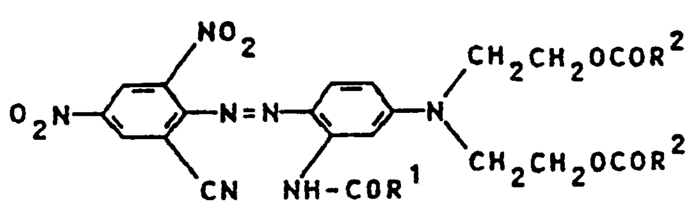

(I)

dans laquelle

$R^1$ représente un groupe alkyle ayant 1 à 3 atomes de carbone,

$R^2$ représenté un groupe alcoxy ayant 1 à 4 atomes de carbone, qui peut être substitué par un groupe méthoxy ou ethoxy.

2. Colorant azoïque selon la revendication 1, caractérisé en ce que $R^1$ représente un groupe méthyle ou éthyle.

3. Colorant azoïque selon la revendication 1, caractérisé en ce $R^2$ représente un groupe méthoxy ou éthoxy.

4. Colorant azoïque selon la revendication 1, caractérisé en ce que $R^1$ représente un groupe méthyle ou

éthyle et $R^2$ représente un groupe méthoxy ou éthoxy.

5. Mélange de deux ou plusieurs colorants azoïques différents répondant chacun à la formule I, selon une ou plusieurs des revendications 1 à 4.

6. Mélange de colorants azoïques selon la revendication 4, caractérisé en ce que les colorants de formule I, contenus dans le mélange, ne diffèrent que par le sens des restes $R^1$.

7. Procédé pour préparer des colorants azoïques de formule I selon la revendication 1, caractérisé en ce qu'on soumet, de façon connue en soi, un colorant azoïque de formule II;

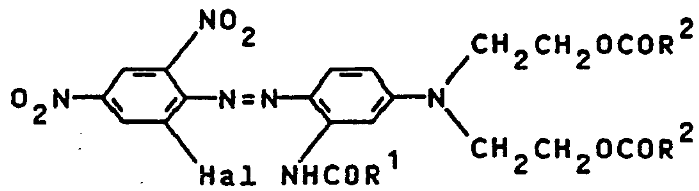

(II)

(dans laquelle Hal représente un atome d'halogène) à une réaction d'échange nucléophile avec CN⊖ comme agent nucléophile.

8. Procédé pour préparer des colorants azoïques de formule I selon la revendication 1, caractérisé en ce qu'on acyle un colorant de formule V:

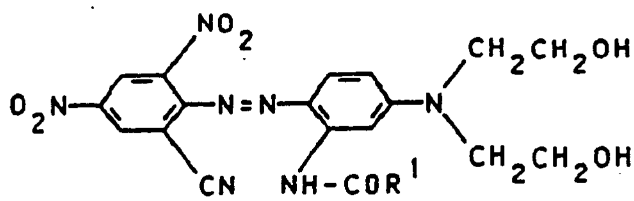

(V)

à l'aide d'agents connus d'acylation, de formule:

$$X—CO—R^2,$$

dans laquelle X représente un reste scindable en partant avec la paire des électrons de liaison et $R^2$ a le sens indiqué à la revendication 1.

9. Procédé selon la revendication 7 ou 8, caractérisé en ce que, pour préparer des mélanges de deux ou de plusieurs colorants de formule I, on utilise, comme matière de départ, des mélanges correspondants de colorants répondant aux formules II ou V.

10. Utilisation des colorants azoïques de formule I selon la revendication 1 ou de leurs mélanges selon la revendication 5, pour teindre ou imprimer des fibres hydrophobes.

**Claims**

1. Monoazo dyestuff of the general formula I

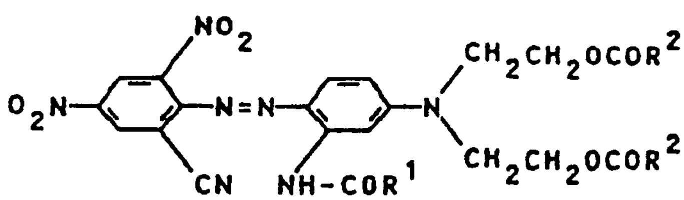

(I)

in which

$R^1$ denotes alkyl having 1 to 3 C atoms and

$R^2$ denotes alkoxy which has 1 to 4 C atoms and can be substituted by methoxy or ethoxy.

2. Azo dyestuffs according to claim 1, characterized in that $R^1$ and $R^2$ denote methyl or ethyl.

3. Azo dyestuff according to claim 1, characterized in that $R^2$ denotes methoxy or ethoxy.

4. Azo dyestuff according to claim 1, characterized in that $R^1$ denotes methyl or ethyl and $R^2$ denotes methoxy or ethoxy.

5. Mixture of two or more different azo dyestuffs of the formula I according to one or more of claims 1 to 4.

6. Mixture of azo dyestuffs according to claim 4, characterized in that the dyestuffs of the formula I present in the mixture differ only in the meaning of the radicals $R^1$.

7. Process for the preparation of azo dyestuffs of the formula I of claim 1, characterized in that an azo dyestuff of the formula II

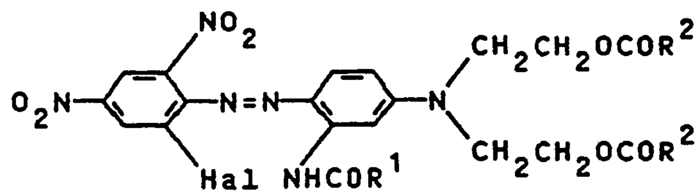

(II)

in which Hal denotes a halogen atom is subjected in a manner which is in itself known to a nucleophilic replacement reaction in which CN⊖ is the nucleophilic agent.

8. Process for the preparation of azo dyestuffs of the formula I of claim 1, characterized in that a dyestuff of the formula V

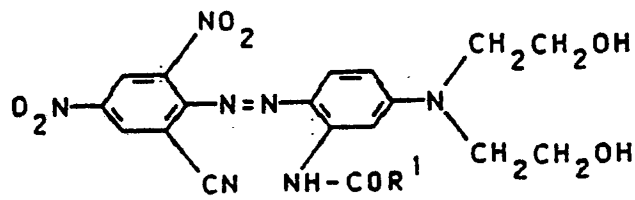

(V)

is acylated with known acylating agents of the formula

$$X—CO—R^2$$

wherein X is a radical which can be detached together with the bonding pair of electrons and $R^2$ has the meaning indicated in claim 1.

9. Process according to claim 7 or 8, characterized in that mixtures of two or more dyestuffs of the formula I are prepared by employing corresponding mixtures of the dyestuffs of the formulae II and V as the starting materials.

10. Use of the azo dyestuffs of the formula I of claim 1 or mixtures thereof according to claim 5 for dyeing or printing hydrophobic fibres.